# EUROPEAN PATENT APPLICATION

(11) **EP 2 287 138 A2**
(43) Date of publication of application: **23.02.2011**
(21) Application number: 10172012.6
(22) Date of filing: 05.08.2010
(51) Int. Cl.: C04B 41/89, F01D 5/28

(54) **Techniques for depositing coating on ceramic substrate**

(30) Priority: 05.08.2009 US 231510 P
(71) Applicant: Rolls-Royce Corporation, Indianapolis, IN 46241 (US)
(72) Inventor: Naik, Subhash, Carmel, IN 46033 (US); Sinatra, Raymond, Indianapolis, IN 46278 (US)
(74) Representative: Harrison Goddard Foote

(57) **Abstract**

A method of coating a substrate, the method including depositing mullite on the substrate during a first time period via thermal spraying to form a first layer, the mullite comprising mullite powder formed via at least one of a fused plus crush or sinter plus crush process; and depositing a second material on the first layer to form a second layer, wherein the substrate is at a temperature less than approximately 50 degrees Celsius at approximately a beginning of the first time period. In some embodiments, the method may further include depositing silicon to form a silicon bond layer between the substrate and mullite layer.

## Description

### TECHNICAL FIELD

The disclosure relates to coatings for high-temperature mechanical systems, such as gas turbine engines, and more particularly to coatings including one or more mullite layers.

### BACKGROUND

The components of high-temperature mechanical systems, such as, for example, gas-turbine engines, must operate in severe environments. For example, hot section components of gas turbine engines, e.g., turbine blades and/or vanes, exposed to hot gases in commercial aeronautical engines may experience surface temperatures of greater than 1,000°C. Furthermore, economic and environmental concerns, e.g., the desire for improved efficiency and reduced emissions, continue to drive the development of advanced gas turbine engines with higher gas inlet temperatures. As the turbine inlet temperature continues to increase, there is a demand for components capable of operating at such high temperatures.

Components of high-temperature mechanical systems may include ceramic and/or superalloy substrates. Coatings for such substrates continue to be developed to increase the operating capabilities of such components and may include thermal barrier coatings (TBC) and environmental barrier coatings (EBC). In some examples, thermal barrier coatings (TBC) may be applied to substrates to increase the temperature capability of a component, e.g., by insulating a substrate from a hot external environment. Further, environmental barrier coatings (EBC) may be applied to ceramic substrates, e.g., silicon-based ceramics, to provide environmental protection to the substrate. For example, an EBC may be applied to a silicon-based ceramic or ceramic composite substrate to protect against the recession of the ceramic substrate resulting from operation in the presence of water vapor in a high temperature combustion environment. In some cases, an EBC may also function as a TBC based on low thermal conductivity values of the EBC, although a separate compatible TBC may also be added to a substrate in addition to an EBC to further increase the temperature capability of a component.

### SUMMARY

In general, the disclosure relates to techniques for depositing one or more materials on a substrate to form layers that make up a coating. Such techniques may be applicable to the depositions of a coating on ceramic or ceramic composite substrates, which in most cases may function as an environmental barrier coating (EBC) e.g., when applied to ceramic components of high temperature mechanical systems. In some cases, an EBC may include a silicon bond layer, an intermediate layer containing mullite (3Al₂O₃.2SiO2) and an outer layer. The mullite-containing layer may be formed by depositing mullite powder on the ceramic substrate. In some embodiments, mullite powder may be deposited on a ceramic substrate via thermal spraying, e.g., air plasma spraying, to form a layer including the deposited mullite. The outer layer may be formed by depositing a second material on the mullite-containing layer. In some embodiments, the second material may include barium strontium aluminum silicate (BSAS) or one or more rare-earth silicates, such as Yb-monosilicate or Yb-disilicate.

According to some embodiments of the disclosure, mullite powder may be deposited on a ceramic substrate via thermal spraying to form a mullite-based layer of an EBC in a low temperature environment. For example, a ceramic substrate may be at a substantially uniform temperature of less than 50 degrees Celsius at least at the beginning of the mullite deposition process. Such a temperature limit may correspond to conditions achievable without providing supplemental heat to a ceramic substrate, as may be the case in a thermal spraying while the substrate is in a furnace and/or the use of back side heating during the mullite deposition process. Despite the low temperature environment in which the thermal spraying of the mullite powder takes place, the mullite layer formed from the deposition may perform substantially the same or even better than mullite layers formed by depositing mullite via thermal spraying in a higher temperature environment, e.g., those associated with the use of furnace deposition and/or back-side heating of the substrate.

As will be described in further detail below, mullite powder that has been manufactured by a fused or sinter plus crush process, e.g., rather than that manufactured by a spray granulation process, may allow for the thermal spraying of mullite powder in a low temperature environment to form a mullite layer that perform substantially the same or even better than mullite layers formed via thermal spraying of mullite powder in a higher temperature environment. For example, mullite powder manufactured by a fused plus crush or sinter plus crush process may be thermally sprayed on ceramic substrates starting at a time when the substrate temperatures is less than 50 degrees Celsius to form a mullite-containing layer that performs adequately at high temperatures without exhibiting substantial cracking or delamination during thermal cycling, even without heat treating the mullite layer after its formation.

Techniques for forming an EBC that includes a silicon bond layer applied between a ceramic substrate and a mullite layer are also described. Such a silicon bond layer may be formed by depositing appropriate silicon material on a ceramic substrate prior to the deposition of the mullite material via thermal spraying. In some embodiments, the silicon bond layer may undergo a high temperature heat treatment for a relatively short amount of time, e.g., approximately 1 hour at about 1200 degrees Celsius, prior to the deposition of the mullite material on the silicon bond layer via thermal spraying. Such a technique may promote adhesion between the silicon bond layer and the ceramic substrate to enhance the adhesion of the EBC system to the ceramic substrate.

In one embodiment, the disclosure is directed to a method of coating a substrate comprising depositing mullite on the substrate during a first time period via thermal spraying to form a first layer, the mullite comprising mullite powder formed via at least one of a fused plus crush or sinter plus crush process; and depositing a second material on the first layer to form a second layer, wherein the substrate is at a temperature less than approximately 50 degrees Celsius at approximately a beginning of the first time period.

In another embodiment, the disclosure is directed to a method of coating a substrate, the method comprising depositing silicon on the substrate to form a silicon layer; heat treating the silicon layer; depositing mullite on the silicon layer via thermal spraying to form a first layer subsequent to the heat treatment of the silicon layer, the mullite comprising mullite powder formed via at least one of a fused plus crush or sinter plus crush process; depositing a second material on the first layer to form an intermediate layer; and depositing a third material on the intermediate layer to form a third layer.

In another embodiment, the disclosure is directed to a method of coating a substrate, the method comprising depositing mullite on the substrate via thermal spraying to form a first layer; and depositing a second material on the first layer via thermal spraying to form a second layer, the second material comprising at least one of barium strontium aluminum silicate (BSAS) or a rare-earth silicate, wherein the substrate is at a temperature of less than 150 degrees Celsius when the second material is first deposited.

In another embodiment, the disclosure is directed to a method of coating a substrate, the method comprising depositing silicon on the substrate to form a silicon layer; heat treating the silicon layer; and depositing mullite on the substrate during a first time period via thermal spraying to form a first layer, the mullite comprising mullite powder formed via at least one of a fused plus crush or sinter plus crush process.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1 is a cross-sectional diagram illustrating an example article including an example EBC on a substrate.

FIG. 2 is a flow chart illustrating an example technique for applying layers of an EBC on a substrate to generate the example article of FIG. 1.

FIG. 3 is a flow chart illustrating another example technique for applying layers of an EBC on a substrate to generate the example article of FIG. 1.

FIG. 4 is a cross-sectional diagram illustrating another example article including an example EBC on a substrate.

FIGS. 5A and 5B are cross-sectional photographs of a portion of example articles including example EBCs including layers that were deposited at approximately 1200 degrees Celsius and approximately 25 degrees Celsius, respectively.

FIGS. 6A and 6B are additional cross-sectional photographs of the example articles of FIGS. 5A and 5B, respectively.

### DETAILED DESCRIPTION

In general, embodiments of the disclosure relate to techniques for applying coatings to a variety of substrates, such as, e.g., ceramic substrates. In some embodiments, the applied coatings may function as an EBC on ceramic substrates used for components of high temperature mechanical system to increase the operating capabilities of components of high temperature mechanical systems and extend the components durability. For example, an EBC may be applied to a silicon-based ceramic component to protect against recession of the component caused by the volatilization of silica scale by water vapor in the high temperature combustion environment.

As will be described below, an EBC may be a multilayer coating including an outer layer containing one or more rare-earth silicates and/or barium strontium aluminum silicate (BSAS) that may be bonded to the ceramic substrate via a mullite-containing layer, which may be referred as the mullite layer. In some cases, the EBC may include a silicon-based bond layer provided between the substrate and mullite layer to adhere the mullite layer to the substrate and to extend the life of the coating.

The mullite layer of an EBC may be formed by depositing mullite in the form of mullite powder on the surface of a substrate via a thermal spraying process, such as, e.g., plasma spraying. In some examples, the mullite powder used may be manufactured using a plasma spray granulation process. However, due to the relatively high phase instability of mullite manufactured by a plasma spray granulation process, the mullite layer formed via the thermal spraying process may include non-homogenized mullite in both amorphous and crystalline phases. If the mullite layer contains too high a concentration of amorphous phase mullite, then the environmental protection provided by the EBC to the substrate may be reduced over the life of substrate. For example, the amorphous non-homogenous mullite in a mullite layer may be prone to crystalline phase transformations during thermal cycling that induce volumetric changes within the mullite layer. In some cases, the volumetric changes may cause cracking and/or delamination of the mullite layer, which may reduce the extent of environmental protection provided by the EBC to the ceramic component.

To reduce the amount of amorphous mullite in the mullite layer, the thermal spraying process may include heating the ceramic substrate to an elevated temperature within a closed environment (e.g., by heating the substrate within a furnace room maintained at approximately 1200 degrees Celsius or providing supplemental heat towards one or more surfaces of the substrate) and maintaining the substrate at the elevated temperature during the thermal spraying of the mullite powder, which has been manufactured by plasma spray granulation technique, to promote the deposition of crystalline mullite rather than amorphous mullite. Similarly, the substrate may also be maintained at an elevated temperature during the deposition of the material used to form the outer layer, e.g., one or more rare-earth silicates and/or BSAS, to provide for suitable performance of the outer layer and/or bonding to the mullite layer.

Additionally or alternatively, a substrate may be heat treated, e.g., at a temperature greater than 1200 degrees Celsius for greater than 10 hours, after one or more of these EBC layers have been formed on the substrate to homogenize/stabilize the crystalline phase mullite or transform amorphous mullite to crystalline mullite in the EBC prior to exposing the substrate to thermal cycling to increase the reliability of the EBC.

However, while the high temperature application and/or heat treatment of one or more layers of the EBC can in some cases address the phase instability issues, such a high temperature process requirements can dramatically increase the cost and relative complexity of applying an EBC to a ceramic component. Furthermore, such process requirements can decrease the flexibility of manufacturing and design of such components. For example, in such cases, the overall size and/or shape of a component that the EBC is being applied to may be limited by the relative dimensions of the heat controlled environment, such as the size of the high temperature furnace, required to maintain the component at an appropriate elevated temperature during the application of one or more EBC layers and/or heat treat a coated substrate.

As will be described in greater detail below, embodiments of the disclosure may include techniques for forming one or more layers of an EBC, including a mullite layer, on a substrate in a low temperature environment by depositing the respective material via thermal spraying without requiring extended high temperature heat treatment of the mullite-coated substrate. Despite the low temperature deposition of the materials that form the respective layers of the EBC, the EBC may perform the same or similar to that of an EBC with respective layer(s) that have been deposited via thermal spraying on the substrate at elevated temperatures. In particular, the mullite layer may be formed on a substrate by depositing mullite powder manufactured via a fused or sinter plus crush process, e.g., rather than a plasma spray granulation process, via thermal spraying, such as, e.g., air plasma spraying, even without substantially heating the substrate in conjunction with the deposition and/or heat treating the mullite-coated substrate. Despite the low temperature application, such a mullite layer may not exhibit substantial cracking or delamination from the substrate even after undergoing thermal cycling.

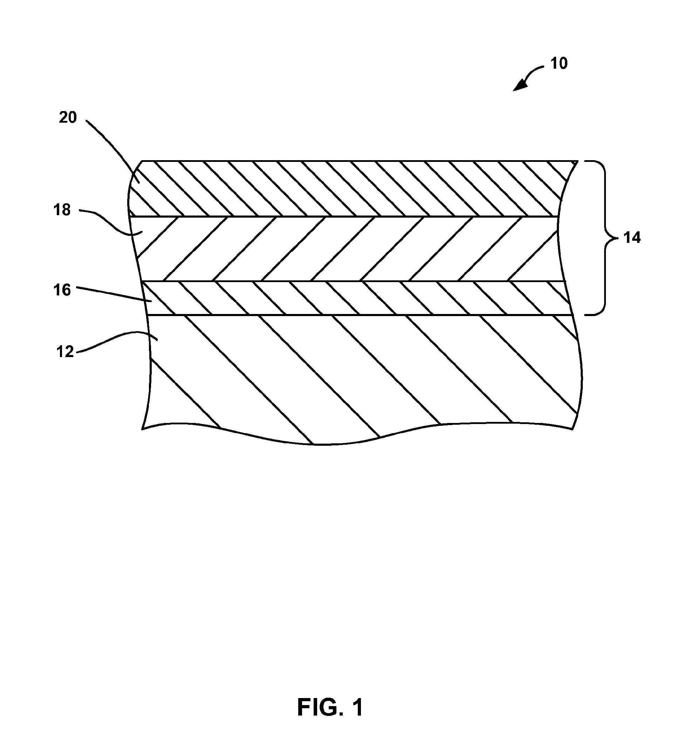

FIG. 1 is a cross-sectional diagram illustrating an example article 10, which may be used in a high temperature mechanical system. Article 10 includes EBC 14 applied on substrate 12. As shown, EBC 14 is a multilayer coating that includes bond layer 16, intermediate layer 18 and outer layer 20. In general, EBC 14 may provide environmental protection to allow article 10 to operate in severe environments, e.g., by preventing recession of substrate 12 in a high temperature combustion environment.

Substrate 12 may be a component of a high temperature mechanical system, such as, e.g., a hot section component of a gas turbine engine. Examples of such components may include, but are not limited to, turbine blades, blade tracks, combustion liners, and the like. Substrate 12 may include silicon-containing ceramics, such as, e.g., silicon carbide (SiC), silicon nitride (Si₃N₄), composites having a SiC or Si₃N₄ matrix, silicon oxynitride, and aluminum oxynitrides; an silicon containing metal alloy, such as molybdenum-silicon alloys (e.g., MoSi₂) and niobium-silicon alloys (e.g., NbSi₂); and an oxide-oxide ceramic.

Substrate 12 may include a matrix, such as, e.g., a ceramic matrix composite (CMC), which may include any useful ceramic matrix material, including, for example, silicon carbide, silicon nitride, alumina, silica, and the like. The matrix may further include any desired filler material, and the filler material may include a continuous reinforcement or a discontinuous reinforcement. For example, the matrix may be reinforced with ceramic fibers, whiskers, platelets and chopped or continuous fibers.

The filler composition, shape, size, and the like may be selected to provide the desired properties to the matrix. For example, in some embodiments, the filler material may be chosen to increase the toughness of a brittle ceramic matrix. In other embodiments, the filler may be chosen to provide a desired property to the matrix, such as thermal conductivity, electrical conductivity, thermal expansion, hardness, or the like.

In some embodiments, the filler composition may be the same as the matrix material. For example, a silicon carbide matrix may surround silicon carbide whiskers. In other embodiments, the filler material may include a different composition than the matrix, such as mullite fibers in an alumina matrix, or the like. In one embodiment, a CMC may include silicon carbide continuous fibers embedded in a silicon carbide matrix.

EBC 14 may include bond layer 16, which in the example of FIG. 1 is applied directly on substrate 12. Bond layer 16 may include silicon, e.g., in the form of high purity, plasma sprayable grade silicon powder, and may be formed by depositing the appropriate silicon material on substrate 12 via one or more suitable thermal spraying processes, such as, e.g., plasma spraying. In some cases, bond layer 16 may optionally be included in EBC 14 to promote adherence of intermediate layer 18 and/or outer layer 20 to substrate 12. While EBC 14 is shown with bond layer 16, in some embodiments, EBC 14 may not include bond layer 14. For example, intermediate layer 18 may be formed directly on substrate 12 rather than being separated by bond layer 16.

Bond layer 16 may formed at any suitable thickness, such as a thickness that allows EBC 14 to provide environmental protection to article 10 as described herein. For example, in one embodiment, bond layer 16 may have thickness in the range of approximately 0.2 mils to approximately 5 mils. In some embodiments, bond layer 16 may have thickness in the range of approximately 0.5 mils to approximately 5 mils, such as approximately 2 mils to approximately 4 mils or approximately 1 mil to approximately 4 mils.

EBC 14 may also include intermediate layer 18, which may be provided on top of bond layer 16 and/or substrate 12. Intermediate layer 18 may include mullite manufactured by a fused or sinter plus crushed technique, at least some of which is in the crystalline phase, and may be formed by depositing mullite powder on substrate 12 via one or more suitable thermal spraying processes, including plasma spraying. In some embodiments, intermediate layer 18 may additionally include greater than approximately 50 percent by weight crystalline mullite, such as, e.g., approximately 60 percent by weight crystalline mullite or 80 percent by weight crystalline mullite. In some examples, intermediate layer 18 may include approximately 100 percent by weight crystalline mullite.

In some embodiments, the balance of intermediate layer 18 other than that of the mullite may include an amount of BSAS, e.g., in cases in which outer layer 20 includes BSAS. For example, intermediate layer 18 may include up to approximately 80 percent by weight BSAS, such as, e.g., approximately 40 percent by weight BSAS or approximately 20 percent by weight BSAS. In other embodiments, the balance of intermediate layer 18 may include an amount of rare-earth silicate, e.g., in cases in which outer layer 20 includes rare-earth silicate. For example, intermediate layer 18 may include up to approximately 80 percent by weight rare-earth silicate, such as, e.g., approximately 40 percent by weight rare-earth silicate or approximately 20 percent by weight rare-earth silicate.

The mullite material may be deposited on bond layer 16 and substrate 12 via a thermal spraying process to form intermediate layer 18 without maintaining or providing substrate 12 at an elevated temperature relative the thermal spraying process and/or heat treating intermediate layer 18 after the mullite has been thermally sprayed. Despite the relatively low temperature application, intermediate layer 18 may still perform the same or similar to that of a mullite layer deposited at high temperature and/or that has undergone heat treatment. In particular, the mullite layer formed via the deposition of mullite powder manufactured via a fused or sinter plus crush process may not exhibit undesirable volumetric changes during thermal cycling that may cause EBC 14 to fail, e.g., due to cracking or delamination, even though the substrate was not maintained at an elevated temperature during the thermally spraying process or heat treated after intermediate layer 18 was formed. In some embodiments, intermediate layer 18 may include greater than approximately 50 percent by weight crystalline mullite, such as, e.g., greater than approximately 80 percent by weight crystalline mullite, even without thermal spraying the mullite powder on substrate 12 via thermal spraying or heat treating substrate 12 after the formation of intermediate layer 18.

As previously mentioned, such a process may be enabled by using a mullite powder for thermal spraying that has been generated via a fused plus crush process and/or sinter plus crush process rather than via a plasma spray granulation process, for example. In some cases, mullite powder generated via a fused or sinter plus crushed process may allow for deposition of the mullite powder via thermal spraying at a relatively lower temperature than mullite powder generated via spray granulation. Although not wishing to be limited by theory, it is believed that mullite powder generated via a fused or sinter plus crush process may contain relatively high concentration of stoichiometric amorphous phase mullite in the powder material. Conversely, mullite powder generated via spray granulation may include a relatively high concentration of non-stoichiometric or non-homogenous phase mullite powder. The volumetric changes associated with conversion of stoichiometric amorphous phase mullite to crystalline mullite in a high temperature environment is less than the volumetric changes associated with the phase conversion of non-stoichiometric amorphous phase mullite due to increased homogenity. In some cases, the volumetric changes associated with the conversion of stoichiometric amorphous phase mullite may not be great enough to cause delamination of an EBC due to the thermal expansion of the mullite layer in high temperatures, while the volumetric changes associated with the conversion of non-stoichiometric amorphous phase mullite may be great enough to cause delamination of an EBC due to the thermal expansion of the mullite layer in high temperatures.

Intermediate layer 18 may be formed at any suitable thickness, such as a thickness that allows EBC 14 to provide environmental protection to article 10 as described herein. For example, one embodiment, intermediate layer 18 may have thickness in the range of approximately 1 mil to approximately 7 mils. In still another embodiment, intermediate layer 18 may have thickness in the range of approximately 4 mils to approximately 6 mils. In some embodiments in which EBC 14 includes bond layer 16 and intermediate layer 18, the ratio of layer thickness between bond layer 16 and intermediate layer 18 may range from approximately 0.1 to approximately 1.5 such as, e.g., from approximately 0.2 to approximately 1.0.

EBC 14 may also include outer layer 20. In the example of FIG. 1, outer layer 20 has been formed directly on intermediate layer 16 such that it is adhered to substrate 12 via intermediate layer 18 and bond layer 16. Outer layer 20 may include one or more components selected to provide environmental protection for substrate 12 in combination with bond layer 16 and intermediate layer 18 as described herein. In some embodiments, outer layer 20 may include one or more rare-earth silicates, such as, e.g., ytterbium mono-silicate or ytterbium di-silicate. Additionally or alternatively, outer layer 20 may include BSAS, e.g., in situations in which the operating temperature of the component is below approximately 2400 degrees Fahrenheit.

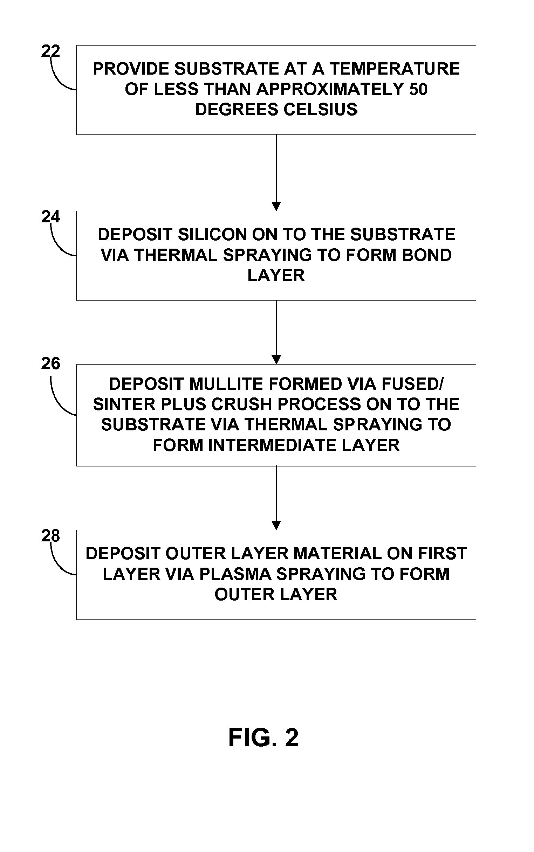

The material selected for outer layer 20 may be deposited on intermediate layer 18 via a thermal spraying process to form outer layer 18. As will be described in further below with respect to FIG. 2, in some embodiments, the outer layer material may be thermally sprayed on intermediate layer 18 to form outer layer 20 while substrate 12 is maintained at substantially uniform temperature that is less than 150 degrees Celsius, such as, e.g., less than 50 degrees Celsius. In some cases, this may include depositing the outer layer material, e.g., BSAS or one or more rare-earth silicates, via thermal spraying on substrate 12 while the substrate is provided at a temperature that is approximately the same as that of substrate 12 when the mullite material was initially deposited via thermal spraying to form intermediate layer 18. Despite the relatively low deposition temperature, it may be possible to form outer layer 20 including one or more rare earth silicates or BSAS that is adequately bonded to intermediate layer 18 while still preventing coating delamination in outer layer 20. In this manner, substrate 12 may be coated with intermediate layer 18 and outer layer 20 via thermal spraying without having to provide additional heat to substrate 12 during the application process of EBC 14.

Outer layer 20 may be formed at any suitable thickness, such as a thickness that allows EBC 14 to provide environmental protection and thermal barrier to article 10 as described herein. For example, in one embodiment, outer layer 20 may have thickness in the range of approximately 2 mils to approximately 15 mils. In still another embodiment, outer layer 20 may have thickness in the range of approximately 4 mils to approximately 12 mils.

FIG. 2 is a flow chart illustrating an example technique for applying layers 16, 18, 20 of EBC 14 on substrate 12 to generate article 10 of FIG. 1. As indicated in FIG. 2, uncoated substrate 12 may be provided at a temperature of less than approximately 50 degrees Celsius (22). In some cases, substrate 12 may be undergo one or more preparation steps prior to the being coated with one or more of the layers described herein. For example, substrate may be grit blasted with a suitable material, e.g., aluminum oxide and the like, to prepare the substrate surface for coating. In any case, appropriate silicon material may be deposited of substrate 12 at via any suitable process, including thermal spraying, to form bond layer 16. In some embodiments, the deposition of the silicon material may begin when substrate 12 is at a temperature of less than 50 degrees Celsius (24).

After bond layer 16 has been formed on substrate 12, mullite powder that has been manufactured via a fused plus crushed and/or sinter plush crush process may be deposited on bond layer 16 via thermal spraying to form intermediate layer 18(26). The deposition of the mullite powder on the substrate may begin even when the substrate is at a substantially uniform temperature of less than 50 degrees Celsius (26).

After intermediate layer 18 has been formed on substrate 12, the outer layer material, e.g., one or more rare earth silicates or BSAS, may be deposited on intermediate layer 18 via thermal spraying to form outer layer 18. Such a deposition process may also begin even when the substrate is at temperature of less than 50 degrees Celsius (28). In this manner, the respective layers 16, 18, 20 of EBC 14 may be applied to substrate 12 in a relatively low temperature air environment while still forming a suitable coating that provides environmental protection to substrate in a high temperature combustion environment.

As illustrated by the example of FIG. 2, in some embodiments, one or more layers of EBC 14 may be deposited on substrate 12 via thermal spraying even when the temperature of substrate 22 is at a relatively low, which may include temperatures realized without purposefully elevating the temperature of the substrate above that generally exhibited under normal conditions. For example, in FIG. 2, each of bond layer 14, intermediate layer 18, and outer layer 20 may be formed on substrate via thermal spraying when the substrate at a substantially uniform temperature of less than approximately 50 degrees Celsius. Such a temperature limit may generally correspond to the maximum temperature that may be naturally exhibited in a space without providing substantial supplemental heat to the space beyond that provided by conventional device or systems that may be used to control the temperature of a room, e.g., from a heating, ventilation and air conditioning (HVAC) system. In particular, the low temperature process may be achieved without requiring substrate to be heated in a furnace room or purposefully providing supplemental heat directed to substrate 12 for purposes of heating all or portions of substrate 12 during the deposition process.

Depending in part on the environment that the layer deposition process is undertaken, e.g., the natural temperature of the room at which the deposition process is undertaken, substrate 12 may be at a temperature less than approximately 50 degrees Celsius at the beginning of the deposition of one or more of layer 16, 18, and 20, which includes the beginning of the deposition of the mullite powder on the substrate (26), as previously described. For example, substrate 12 may be at a temperature of less than approximately 40 degrees Celsius at the beginning of the mullite powder deposition, such as, e.g., between approximately 15 degrees Celsius and approximately 35 degrees Celsius. In some embodiments, substrate 12 is not be substantially heated above the temperature of the surrounding space in which the thermal spraying of the layer material is being performed, wherein the ambient temperature of the surrounding space, e.g., the room in which the thermal spraying process is performed, is less than approximately 50 degrees Celsius. In some embodiments, the ambient temperature of the surrounding space may be between approximately 10 degrees Celsius and 40 degrees Celsius, such as, e.g., between approximately 15 degrees Celsius and 30 degrees Celsius.

Despite the relatively low temperatures of the substrate during thermal spraying, intermediate layer 18 may contain a concentration of stoichiometric and/or homogenous amorphous and crystalline mullite phases such that cracking and/or delamination of intermediate layer 18 is prevented during thermal cycling. In this manner, one or more of layers 16, 18, 20 may be formed via thermal spraying of mullite powder without having to provide additional heat to substrate 12 to a temperature substantially greater than that of the space

While substrate 12 may be at a temperature of less than 50 degrees Celsius at the beginning of the deposition of the materials of layers 16, 18, and 20, it is recognized that the local temperature of certain portions of substrate 12 may be increased above approximately 50 degrees Celsius, including local temperature greater than or equal to that of 50 degrees, at periods throughout the overall deposition time of the respective layer material. For example, during thermal spraying of mullite powder on substrate 12 to form intermediate layer 18, the deposition surface of substrate 22 may reach temperatures greater than or equal to 50 degrees Celsius because of elevated temperature of the material being deposited on the surface of substrate 22. However, while the substrate temperature may increase above the temperature at the beginning of the mullite deposition, it is as a result from the heat provided by the thermal spraying process rather than by a supplemental source, as would be the case in a furnace room or with additional heat directed to substrate 12. Even with the additional heat from the thermal spraying process, in some embodiments, substrate 12 may be maintained at a temperature of less than 200 degrees Celsius, such as, for example, between approximately 15 degrees Celsius and approximately 200 degrees Celsius or between approximately 20 degrees Celsius and approximately 150 degrees Celsius, throughout the deposition of the mullite material via thermal spraying.

The beginning temperature of substrate 12 relative the deposition of one or more of the layer materials may be achieved via any suitable method. Substrate 12 may be at a temperature of less than approximately 50 degrees Celsius by simply allowing the temperature of substrate 12 to be substantially equal to that of the room temperature of the surrounding space, assuming that that surrounding space is less than approximately 50 degrees Celsius. This may allow EBC 12, and intermediate layer 18, in particular, to be formed on substrate 12 via a thermal spraying process without having to undertake any additional steps to heat substrate 12 during the deposition and/or heat treat substrate 12 alter being coated with EBC 14

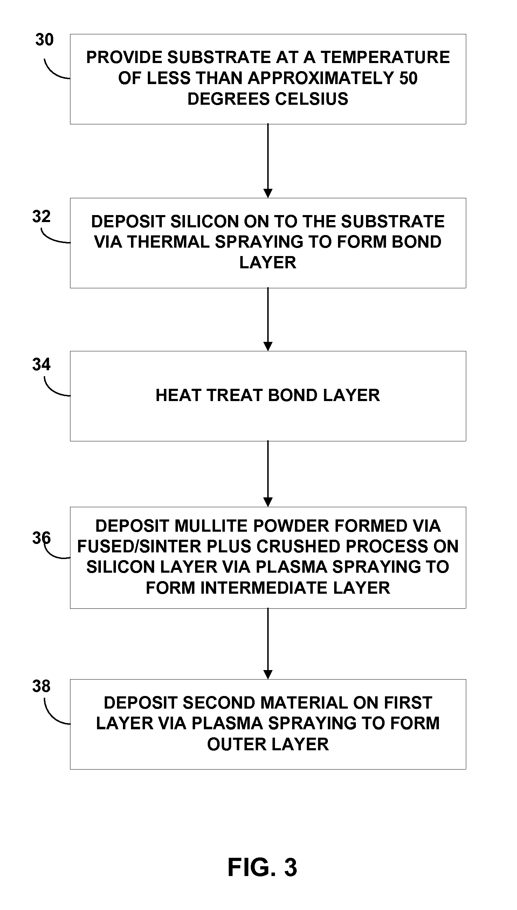

FIG. 3 is a flow chart illustrating an example technique for applying layer 16, 18, 20 of EBC 14 on substrate 12 to generate article 10 of FIG. 1. The example of FIG. 3 includes a heat treatment step after bond layer 16 has been formed on substrate 12 but before intermediate layer 18 has been deposited via thermal spraying. As will be explained below, such an example technique may be useful in situations in which the coefficient of thermal expansion of two or more individual layers of coating 14 are not approximately equal, e.g., differ by approximately 10 percent or greater. However, the examples are not limited as such.

Similar to that of the example of FIG. 2, silicon material may be deposited on uncoated substrate 12 to form bond layer 16 of EBC 14 (32). The appropriate silicon material may then be deposited at via any suitable process, including thermal spraying, to form bond layer 16 and may be deposited in some cases when the substrate is at a temperature of less than 50 degrees Celsius at the starting of the bond layer deposition (30).

Unlike the example of FIG. 2, after bond layer 16 has been formed, substrate 12 and bond layer 16 may undergo diffusion heat treatment prior to the deposition of the mullite powder (34). Such a heat treatment may include exposing substrate 12 and bond layer 16 to a relatively high heat environment, e.g., within a furnace, for a relatively short amount of time. In some embodiments, the heat treatment step may include placing substrate 12 and bond layer 16 in an environment at a temperature between approximately 800 degrees Celsius and approximately 1250 degrees Celsius for an amount of time between approximately 0.2 hours and approximately 4 hours. For example, in some embodiments, heat treatment step may include placing substrate 12 and bond layer 16 in an environment at a temperature between approximately 1100 degrees Celsius and approximately 1225 degrees Celsius for an amount of time between approximately 0.5 hours and approximately 2 hours.

After undergoing diffusion heat treatment, mullite powder may be deposited on bond layer 16 via thermal spraying to form intermediate layer 18 (36) and outer layer material may be deposited on intermediate layer 18 via thermal spraying to form outer layer 20 (38), as described previously with respect to FIG. 2. Both intermediate layer 18 and outer layer 20 may be formed on substrate 12 via plasma spraying without placing substrate 12 at a high temperature environment, e.g., at a temperature greater than 50 degrees Celsius.

The inclusion of the diffusion heat treatment step may serve to increase the adhesion of EBC 14 to substrate 12, especially in cases in which the coefficient of thermal expansion of the layers of EBC 14 are not the substantially the same. In some embodiment, substrate 12 and bond layer 16 may undergo diffusion heat treatment as described above when the coefficient of thermal expansions of layers 16, 18, 20 differ by more than 5 percent, such as e.g., more than 10 percent, to increase the adhesion of EBC 14 to substrate 12, even when intermediate layer 18 and outer layer 20 are formed by deposition of the respective materials via thermal spraying without maintaining substrate 12 at an elevated temperature, e.g., at a temperature greater than 50 degrees Celsius.

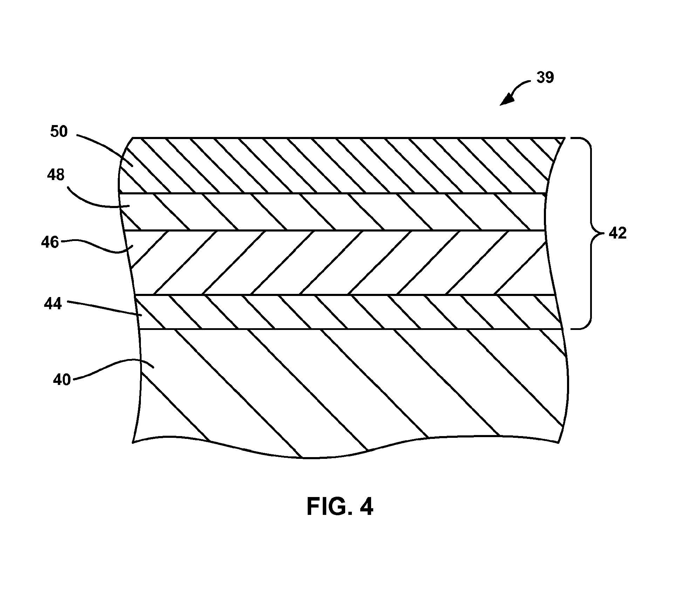

FIG. 4 is a cross-sectional diagram illustrating another example article 39, which may be used in a high temperature mechanical system. As shown, example article 39 includes substrate 40, which is substantially the same or similar to that of substrate 12 of FIG. 1, and EBC 42 applied on substrate 12. EBC 42 includes bond layer 44, first intermediate layer 46, and outer layer 50, which may be substantially the same or similar to that of bond layer 16, intermediate layer 18 and outer layer 20, respectively, of EBC 14 of FIG. 1.

Unlike the embodiment shown in FIG. 1, EBC 42 includes second intermediate layer 48 provided between outer layer 50 and first intermediate layer 46. Second intermediate layer 48 may function to reduce the strain on the interface of outer layer 50 and first intermediate layer 46 during thermal cycling for cases in which first intermediate layer 46 and outer layer 50 exhibit different coefficients of thermal expansion. In some examples, second intermediate layer 48 may provide chemical compatibility and/or thermal expansion transition between first intermediate layer 46 and outer layer 48.

The structure and composition of second intermediate layer 48 may vary, and may be selected based on one or more factors. With reference to FIG. 4, second intermediate layer 46 may be a single layer or include a plurality of sublayers. In some embodiments, second intermediate layer 46 may have a substantially uniform composition throughout, while in other embodiments second intermediate layer 46 may be compositionally graded based on the composition of the adjacent layers.

In some embodiments, second intermediate layer 48 may include at least one of alumina and/or mullite. The composition of second intermediate layer 48 may be selected based on the composition of first intermediate layer 46 and/or outer layer 50. For example, the composition of first intermediate layer 46 and outer layer 50 may generally dictate the coefficient of thermal expansion for the respective layers. Second intermediate layer 48 may include one or more components which allow for second intermediate layer 48 to have a coefficient of thermal expansion that is in between that of the coefficients of thermal expansion of first intermediate layer 46 and outer layer 50. In some embodiments, second intermediate layer 48 may have a coefficient of thermal expansion that is within approximately 10 percent or less than the coefficient of thermal expansion of first intermediate layer 46 and/or outer layer 50.

In this manner, the difference in thermal expansion between first intermediate layer 46 and outer layer 50 may be tempered by the thermal expansion of second intermediate layer 48 when configured as shown in FIG. 4. In some embodiments, alternately or additionally, the composition of second intermediate layer 48 may be selected to provide suitable adhesion between second intermediate layer 48 and first intermediate layer 46, and also between second intermediate layer 48 and outer layer 50.

In some embodiments, second intermediate layer 48 may include one or more components of both first intermediate layer 46 and outer layer 50. For example, when first intermediate layer 46 includes mullite and outer layer 50 includes component ytterbium di-silicate, second intermediate layer 48 may include a mixture of mullite and component ytterbium di-silicate. The mixture may include an approximately equal amount of the components of first intermediate layer 46 and outer layer 50, or may include any other desired mixture or proportion of components from first intermediate layer 46 and outer layer 50.

Second intermediate layer 48 may be applied as a separate layer from first intermediate layer 46 and outer layer 50. For example, mullite powder may be deposited first via thermal spraying to form first intermediate layer 46, as described herein. The desired mixture of the first intermediate layer components, e.g., mullite, and the outer layer components may then be mixed and deposited on first intermediate layer 46 via thermal spraying to form second intermediate layer 48, followed by application of outer layer 50 on second intermediate layer 48, as previously described. Similar to that of outer layer 50 and first intermediate layer 46, second intermediate layer 48 may be initially deposited on first intermediate layer 46 when the temperature of substrate 40 is less than approximately 50 degrees Celsius.

Additionally, second intermediate layer 48 may include more than one sublayers (not shown). In some embodiments, a second intermediate layer having one or more sublayers may allow for the interface between first intermediate layer 46 and outer layer 50 to be compositionally graded. Such compositional grading may reduce the strain on the interface of outer layer 50 and first intermediate layer 46 during thermal cycling for cases in which first intermediate layer 46 and outer layer 50 exhibit different coefficients of thermal expansion. For example, the inclusion of second intermediate layer 48 having multiple sublayers that are compositionally graded may reduce the coefficient of thermal expansion gradient, or in other words, make the compositional transition from the first intermediate layer 46 to outer layer 50 more gradual, thus making the change of coefficients of thermal expansion more gradual. It may be understood that the more sublayers included in the second intermediate layer, the lower the interfacial stresses due to mismatches of coefficients of thermal expansion. The number of sub-layers in the transitional layer need not be limited, but may be chosen according to the desired properties of the article and the time and expense involved in producing the article.

Furthermore, a coating may also include a second intermediate layer that is not divided into sub-layers, but which includes a continuously graded composition. For example, the second intermediate layer may be compositionally most similar to the first intermediate layer at the first intermediate layer-transitional layer interface, and most similar to the outer layer at the outer layer-transitional layer interface, with a composition that continuously transitions from the first intermediate layer composition to the outer layer composition along the depth of the transitional layer.

In some embodiments, intermediate layer 48 may be a rare-earth silicate layer that transitions into another rare-earth silicate layer. For example, intermediate layer 48 may include Yb-disilicate while outer layer 50 may include Yb-monosilicate. The respective layers may be deposited as discrete layers or as functionally graded materials.

Some embodiments of the disclosure may relate to a method of coating a substrate consisting essentially of depositing mullite on the substrate via thermal spraying to form a first layer; and depositing a second material on the first layer to form a second layer, wherein the mullite comprises mullite powder formed via at least one of a fused plus crush or sinter plus crush process.

Some embodiments of the disclosure may relate to a method of coating a substrate consisting essentially of depositing silicon on the substrate to form a silicon layer, depositing mullite on the silicon layer via thermal spraying to form a first layer; and depositing a second material on the first layer to form a second layer, wherein the mullite comprises mullite powder formed via at least one of a fused plus crush or sinter plus crush process. Such a method may not include depositing the mullite layer at a relatively high temperature and/or heat treating the mullite layer, as previously described. In some examples, the method may further consist essentially of heat treating the silicon layer and substrate prior to depositing the mullite on the silicon layer.

### EXAMPLE

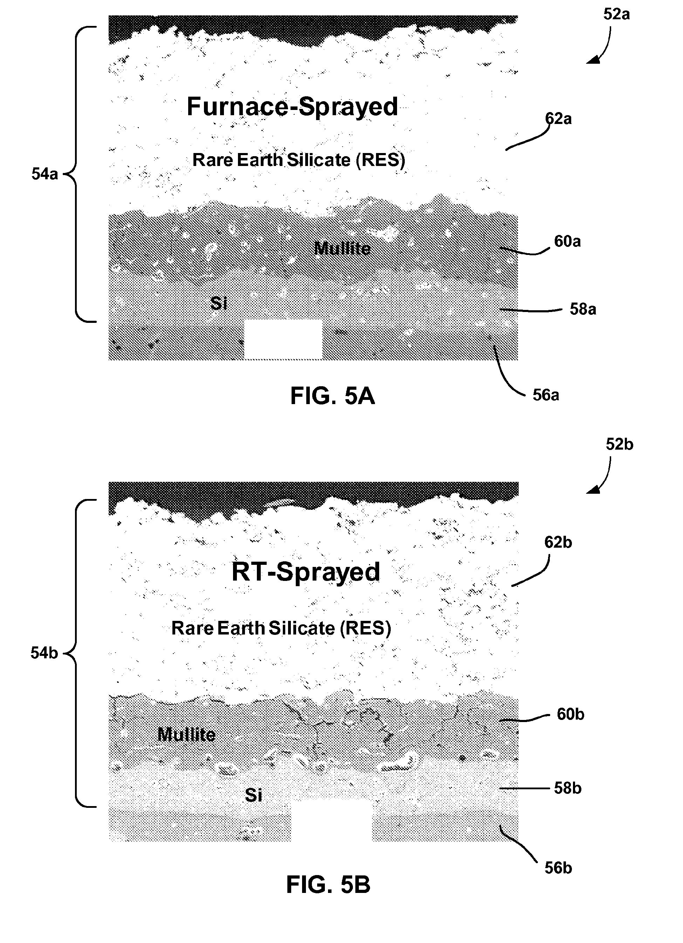

FIGS. 5A and 5B are cross-sectional photographs of non-leading edge portions of example articles 52a and 52b, respectively.

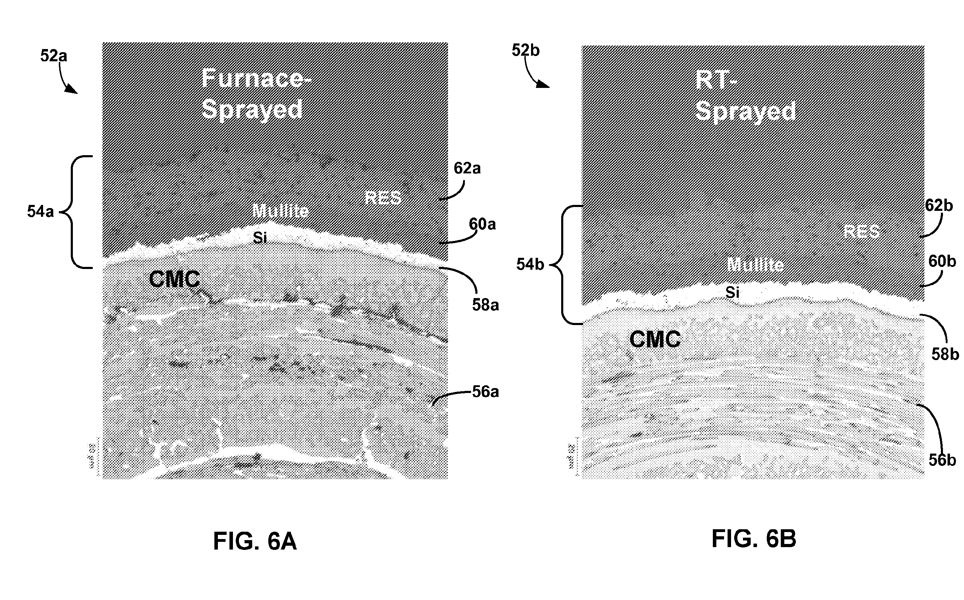

FIGS. 6A and 6B are cross-sectional photographs of a leading edge portion of example articles 52a and 52b, respectively.

Referring to FIGS. 5A and 6A, article 52a included EBC 54a provided on ceramic matrix composite substrate 56a. EBC 54a included silicon bond layer 58a, intermediate layer 60a, and outer layer 62a. Silicon bond layer 58a was formed by depositing silicon directly on the surface of substrate 56a via plasma spraying. Intermediate layer 60a was formed by depositing mullite powder that was produced via a fused plus crush process via air plasma spraying on silicon bond layer 58a. Outer layer 62a was formed by depositing ytterbium di-silicate on intermediate layer 60a. Notably, each layer 58a, 60a, 62a was formed by depositing the respective layer material via air plasma spraying while the substrate was held in a furnace at a temperature of approximately 1200 degrees Celsius. Article 52a was not heat treated after EBC 54a was applied to substrate 56a.

Referring to FIGS. 5B and 6B, article 52b included EBC 54b provided on ceramic matrix composite substrate 56b. EBC 54b included silicon bond layer 58b, intermediate layer 60b, and outer layer 62b. Silicon bond layer 58b was formed by depositing silicon directly on the surface of substrate 56b via plasma spraying. After deposition, silicon bond layer 58b underwent diffusion heat treatment at approximately 1225 degrees Celsius (+/- 25 degrees) for approximately 1 hour. Intermediate layer 60b was then formed by depositing mullite powder that was produced via a fused plus crush process via air plasma spraying on silicon bond layer 58b. Outer layer 62b was formed by depositing ytterbium di-silicate on intermediate layer 60b. Unlike article 52a of FIG. 5A, each layer 58b, 60b, 62b was formed by depositing the respective layer material via air plasma spraying while substrate 56b was initially at a temperature less than approximately 50 degrees Celsius. In particular, the process of air plasma spraying of the layer material on substrate 56b was initiated when substrate 56 was at approximately 25 degrees Celsius, which was the ambient temperature of the room in which the substrate was located in at the time the process was carried out. Similar to that of article 52a, article 52b was not heat treated after EBC 54b was applied to substrate 56b.

Articles 52a and 52b were exposed to substantially the same steam thermal cycling in an environment of greater than 1800 degrees Fahrenheit and greater than 60% humidity. The steam thermal cycling involved exposing articles 52a and 52b to the described environment for greater than 100 cycles for a total of amount of time greater than 100 hours. Additionally, articles 52a and 52b were exposed to laser heat flux through EBCs 54a and 54b, respectively, above 1500 degrees Fahrenheit in conjunction with the steam thermal cycling, for greater than 5 hours. Such testing of articles 52a and 52b simulated engine operating conditions in a high temperature combustion environment in the presence of water vapor.

The cross-sectional photographs of FIGS. 5A, 5B, 6A and 6B were taken after articles 52a and 52b, respectively, underwent the above-described steam thermal cycling. As illustrated by the photographs of FIG. 5A and 5B and FIGS. 5A, 5B, 6A and 6B, article 52b exhibited equivalent durability to that of article 52a. In particular, layers 58a, 60a, and 62a of EBC 54a, as well as layers 58b, 60b, and 62b of EBC 54b were substantially crack-free after steam thermal cycling and maintained excellent adherence to substrates 52a and 52b, respectively. Additionally, the oxidation of substrates 52a and 52b was minimal, as evidenced by the lack of oxide scale formed between EBC 54a, 54b and substrates 52a, 52b, respectively, indicating that EBCs 54a, 54b provided excellent environmental protection for articles 52a, 52b, respectively. It was observed that that the room-temperature sprayed EBC (EBC 54b) was more tolerant to mechanical strains than the furnace sprayed EBC (EBC 54a), which likely may be due to the comparatively higher porosity and microcracks in the room temperature sprayed EBC.

Examples of the disclosure have been described above.

In one aspect, the disclosure relates to a method of coating a substrate, the method comprising: depositing mullite on the substrate during a first time period via thermal spraying to form a first layer, the mullite comprising mullite powder formed via at least one of a fused plus crush or sinter plus crush process; and depositing a second material on the first layer to form a second layer, wherein the substrate is at a temperature less than approximately 50 degrees Celsius at approximately a beginning of the first time period. In some examples, the temperature of the substrate is less than approximately 40 degrees Celsius at approximately the beginning of the first time period. In some examples, the temperature of the substrate is between approximately 15 degrees Celsius and approximately 35 degrees Celsius at approximately the beginning of the first time period. In some examples, the first layer comprises crystalline mullite substantially immediately following the deposition of the mullite. In some examples, the first layer comprises greater than approximately 50 percent by weight crystalline mullite without heat treating the first layer after being formed on the substrate. In some examples, the second layer comprises at least one of barium strontium aluminum silicate (BSAS), ytterbium mono-silicate or ytterbium di-silicate. In some examples, the second layer has a thickness of approximately 2 mils to approximately 15 mils. In some examples, the first layer has a thickness of approximately 1 mils to approximately 6 mils. In some examples, the substrate is not heated via a furnace during the deposition of the mullite in a manner that substantially raises the substantially uniform temperature of the substrate in conjunction with the deposition of the mullite. In some examples, thermal spraying comprises plasma spraying.

In some examples, the method further comprises depositing silicon on the substrate to form a silicon layer before depositing the mullite on the substrate, wherein the silicon layer thickness is approximately 0.5 mils to approximately 5 mils.

In some examples, the method further comprises maintaining the substrate at a temperature less than approximately 200 Celsius throughout the first time period. In such an example, the substrate may be maintained at the temperature between approximately 15 degrees Celsius and approximately 150 degrees Celsius throughout the first time period.

In some examples, the method further comprises depositing silicon on the substrate to form a silicon layer before depositing the mullite on the substrate. In some examples, the method further comprises heat treating the silicon layer prior to depositing the mullite. In some examples, heat treating the silicon layer comprises heat treating the silicon layer at a temperature of about 800 degrees Celsius to about 1250 degrees Celsius for about 0.2 hours to about 4 hours. In some examples heat treating the silicon layer comprises heat treating the silicon layer at a temperature of about 1100 degrees Celsius to about 1225 degrees Celsius for about 0.5 hours to about 2 hours.

In some examples, the method further comprises depositing a third material on the first layer to form a third layer on the first layer before depositing the second material. In some examples, the third layer has a coefficient of thermal expansion that is within approximately 10 percent of a coefficient of thermal expansion of at least one of the first layer or second layer. In some examples, the third layer comprises ytterbium di-silicate and approximately 20 to approximately 50 weight percent mullite. In some examples, the second layer comprises one of ytterbium di-silicate and ytterbium mono-silicate. In some examples, the third layer comprises ytterbium mono-silicate and approximately 20 to approximately 50 weight percent mullite. In some examples, the second layer comprises one of ytterbium mono-silicate and ytterbium di-silicate. In some examples, the third layer comprises ytterbium di-silicate and the second layer comprises ytterbium mono-silicate. In some examples, the third layer comprises mullite and approximately 20 to approximately 50 weight percent barium strontium aluminum silicate (BSAS), and the second layer comprises BSAS. In some examples, the third layer comprise alumina and the second layer comprises ytterbium mono-silicate. In some examples, the third layer further comprises ytterbium mono-silicate, and the third layer has approximately 20 to approximately 50 weight percent alumina. In some examples, the third layer comprise alumina and the second layer comprises ytterbium di-silicate. In some examples, the third layer further comprises ytterbium di-silicate, and the third layer has approximately 20 to approximately 50 weight percent alumina. In some examples, the third layer has a thickness of approximately 1 mil to approximately 4 mils.

In another aspect, the disclosure relates to a method comprising: depositing silicon on the substrate to form a silicon layer; heat treating the silicon layer; depositing mullite on the silicon layer via thermal spraying to form a first layer subsequent to the heat treatment of the silicon layer, the mullite comprising mullite powder formed via at least one of a fused plus crush or sinter plus crush process; depositing a second material on the first layer to form an intermediate layer; and depositing a third material on the intermediate layer to form a third layer. In some examples, the mullited is deposited on the silicon layer during a first time period and the substrate is at a temperature less than approximately 50 degrees Celsius at approximately a beginning of the first time period. In some examples, heat treating the silicon layer comprises heat treating the silicon layer at a temperature of about 1100 degrees Celsius to about 1225 degrees Celsius for about 0.5 hours to about 2 hours. In some examples, the intermediate layer comprises ytterbium di-silicate and approximately 20 to approximately 50 weight percent mullite. In some examples, the third layer comprises one of ytterbium di-silicate and ytterbium mono-silicate. In some examples, the intermediate layer comprises ytterbium mono-silicate and approximately 20 to approximately 50 weight percent mullite. In some examples, the third layer comprises one of ytterbium mono-silicate and ytterbium di-silicate. In some examples, the intermediate layer comprises ytterbium di-silicate and the third layer comprises ytterbium mono-silicate. In some examples, the intermediate layer comprises mullite and approximately 20 to approximately 50 weight percent barium strontium aluminum silicate (BSAS), and the third layer comprises BSAS. In some examples, the intermediate layer comprise alumina and the third layer comprises ytterbium mono-silicate. In some examples, the intermediate layer further comprises ytterbium mono-silicate, and the intermediate layer has approximately 20 to approximately 50 weight percent alumina. In some examples, the intermediate layer comprise alumina and the third layer comprises ytterbium di-silicate. In some examples, the intermediate layer further comprises ytterbium di-silicate, and the intermediate layer has approximately 20 to approximately 50 weight percent alumina.

In another aspect, the disclosure relates to a method of coating a substrate, the method comprising: depositing mullite on the substrate via thermal spraying to form a first layer; and depositing a second material on the first layer via thermal spraying to form a second layer, the second material comprising at least one of barium strontium aluminum silicate (BSAS) or a rare-earth silicate, wherein the substrate is at a temperature of less than 150 degrees Celsius when the second material is first deposited. In some examples, the mullite comprises mullite powder formed via at least one of a fused plus crush or sinter plus crush process. In some examples, the substrate is at a temperature of less than approximately 50 degrees Celsius when the mullite is first deposited on the substrate. In some examples, the substrate is at a temperature of less than 150 degrees Celsius throughout the deposition of the second material.

In another aspect, the disclosure relates to a method a method of coating a substrate, the method comprising: depositing silicon on the substrate to form a silicon layer; heat treating the silicon layer; and depositing mullite on the silicon layer via thermal spraying to form a first layer subsequent to the heat treatment of the silicon layer, the mullite comprising mullite powder formed via at least one of a fused plus crush or sinter plus crush process. In some examples, the mullited is deposited on the silicon layer during a first time period and the substrate is at a temperature less than approximately 50 degrees Celsius at approximately a beginning of the first time period. In some examples, the heat treatment comprises heat treating the silicon layer at a temperature of about 800 degrees Celsius to about 1250 degrees Celsius for about 0.2 hours to about 4 hours. In some examples, the heat treatment comprises heat treating the silicon layer at a temperature of about 1100 degrees Celsius to about 1225 degrees Celsius for about 0.5 hours to about 2 hours. In some examples, the method further comprises depositing a second material on the first layer to form a second layer, the second layer comprising at least one of at least one of barium strontium aluminum silicate (BSAS) or a rare-earth silicate.

In another aspect, the disclosure relates to systems configured to carry out one or more of the techniques describes herein.

## Claims

1. A method of coating a substrate, the method comprising:
depositing mullite on the substrate during a first time period via thermal spraying to form a first layer, the mullite comprising mullite powder formed via at least one of a fused plus crush or sinter plus crush process; and
depositing a second material on the first layer to form a second layer,
wherein the substrate is at a temperature less than approximately 50 degrees Celsius at approximately a beginning of the first time period.

2. The method of claim 1, wherein the temperature of the substrate is less than approximately 40 degrees Celsius at approximately the beginning of the first time period.

3. The method of claims 1 or 2, further comprising maintaining the substrate at a temperature less than approximately 200 Celsius throughout the first time period.

4. The method of any of claims 1 to 3, wherein the first layer comprises crystalline mullite substantially immediately following the deposition of the mullite.

5. The method of any of claims 1 to 4, further comprising depositing silicon on the substrate to form a silicon layer before depositing the mullite on the substrate.

6. The method of claim 5, further comprising heat treating the silicon layer prior to depositing the mullite.

7. The method of claim 6, wherein heat treating the silicon layer comprises heat treating the silicon layer at a temperature of about 800 degrees Celsius to about 1250 degrees Celsius for about 0.2 hours to about 4 hours.

8. The method of any of claim 1 to 7, wherein the substrate is not heated via a furnace during the deposition of the mullite in a manner that substantially raises the substantially uniform temperature of the substrate in conjunction with the deposition of the mullite.

9. A method of coating a substrate, the method comprising:
depositing silicon on the substrate to form a silicon layer;
heat treating the silicon layer; and
depositing mullite on the silicon layer via thermal spraying to form a first layer subsequent to the heat treatment of the silicon layer, the mullite comprising mullite powder formed via at least one of a fused plus crush or sinter plus crush process.

10. The method of claim 9, wherein the mullite is deposited on the silicon layer during a first time period and the substrate is at a temperature less than approximately 50 degrees Celsius at approximately a beginning of the first time period.

11. The method of claims 9 or 10, wherein the heat treatment comprises heat treating the silicon layer at a temperature of about 800 degrees Celsius to about 1250 degrees Celsius for about 0.2 hours to about 4 hours.

12. The method of any of claims 9 to 11, further comprising depositing a second material on the first layer to form a second layer, the second layer comprising at least one of at least one of barium strontium aluminum silicate (BSAS) or a rare-earth silicate.

13. The method of any of claims 9 to 11, further comprising:
depositing a second material on the first layer to form an intermediate layer; and
depositing a third material on the intermediate layer to form a third layer.

14. The method of claim 13, wherein the intermediate layer comprises approximately 20 to approximately 50 weight percent mullite and at least one of ytterbium di-silicate and ytterbium mono-silicate, and the third layer comprises one of ytterbium di-silicate and ytterbium mono-silicate.

15. The method of claim 13, wherein the intermediate layer comprises ytterbium di-silicate and the third layer comprises ytterbium mono-silicate.
